(19) Europäisches Patentamt
European Patent Office
Office européen des brevets

(11) **EP 4 517 295 A1**

(12) **EUROPÄISCHE PATENTANMELDUNG**

(43) Veröffentlichungstag:
05.03.2025 Patentblatt 2025/10

(21) Anmeldenummer: 24195759.6

(22) Anmeldetag: 22.08.2024

(51) Internationale Patentklassifikation (IPC):
**G01N 11/14** *(2006.01)* **B01F 35/212** *(2022.01)*
**B01F 35/222** *(2022.01)* *G01N 11/00* *(2006.01)*

(52) Gemeinsame Patentklassifikation (CPC):
**G01N 11/14; B01F 35/212; B01F 35/222;**
G01N 2011/0046

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **28.08.2023 DE 102023123081**

(71) Anmelder: **Krones AG**
**93073 Neutraubling (DE)**

(72) Erfinder: **Zacharias, Joerg**
**93073 Neutraubling (DE)**

(74) Vertreter: **Grünecker Patent- und Rechtsanwälte
PartG mbB
Leopoldstraße 4
80802 München (DE)**

(54) **VORRICHTUNG UND VERFAHREN ZUM BESTIMMEN EINER RHEOLOGISCHEN EIGENSCHAFT EINER SUSPENSION AUS FASERN UMFASSENDEM MATERIAL ZUM HERSTELLEN VON BEHÄLTERN**

(57) Vorrichtung zum Bestimmen einer rheologischen Eigenschaft einer Suspension aus Fasern umfassendem Material zum Herstellen von Behältern, umfassend einen Tank zum Speichern der Suspension aus Fasern umfassendem Material und eine Steuereinheit, wobei der Tank eine Rührvorrichtung zum Rühren der Suspension aus Fasern umfassendem Material umfasst und die Steuereinheit ausgebildet ist, basierend auf einer Wechselwirkung zwischen der Rührvorrichtung und der Suspension aus Fasern umfassendem Material eine rheologische Eigenschaft der Suspension aus Fasern umfassendem Material zu bestimmen.

FIG. 1

## Beschreibung

Die vorliegende Erfindung betrifft eine Vorrichtung zum Bestimmen einer rheologischen Eigenschaft einer Suspension aus Fasern umfassendem Material zum Herstellen von Behältern gemäß unabhängigem Anspruch 1 und ein entsprechendes Verfahren gemäß unabhängigem Anspruch 8.

## Stand der Technik

Verfahren und Vorrichtungen zum Herstellen von Behältern aus Fasern umfassendem Material sind aus dem Stand der Technik hinreichend bekannt.

Genauere Informationen hinsichtlich des Mischvorgangs der zum Herstellen der Behälter aus Fasern umfassendem Material verwendeten Suspension beziehungsweise der Charakterisierung der Suspension findet sich im Stand der Technik dagegen nicht. Um Behälter hinreichend hoher Qualität herstellen zu können, spielt die genaue Charakterisierung der für die Behälterherstellung bereitgestellten Suspension aus Fasern umfassenden Material jedoch eine wichtige Rolle.

So wird die Suspension aus Fasern umfassendem Material im Stand der Technik typischerweise in einer Rührvorrichtung für ein bestimmtes vorgegebenes Zeitintervall gemischt, um den Feststoff- und Flüssigkeitsanteil gleichmäßig zu dispergieren und die Partikelgröße des Fasern umfassenden Materials zu reduzieren. Eine genaue Charakterisierung der Suspension aus Fasern umfassendem Material hinsichtlich ihrer physikalischen Eigenschaften und/oder genauen Zusammensetzung findet im Stand der Technik jedoch nicht statt. Vielmehr wird die Qualität der Suspension nur empirisch bestimmt, beispielsweise durch die visuelle Kontrolle durch einen Bediener.

Dieses Vorgehen bringt jedoch den Nachteil mit, dass nicht genau bestimmt werden kann, ob die Suspension aus Fasern umfassendem Material hinreichend dispergiert wurde, eine gewünschte Konzentration an Feststoff- beziehungsweise Flüssigkeit und/oder einen bestimmten Quellungsgrad des Feststoffanteils aufweist. Folglich kann die Qualität der mit der Rührvorrichtung hergestellten Suspension aus Fasern umfassendem Material nicht eindeutig bestimmt werden. Dies führt wiederum dazu, dass die Herstellung von Behältern mit gleichbleibend hoher Qualität nicht garantiert werden kann und auch Behälter minderer Qualität erzeugt werden.

## Aufgabe

Ausgehend vom bekannten Stand der Technik liegt die zu lösende technische Aufgabe der vorliegenden Erfindung darin, ein Verfahren und eine Vorrichtung anzugeben, welche es erlauben die Qualität einer Suspension aus Fasern umfassendem Material zum Herstellen von Behältern auf präzise Weise zu bestimmen.

## Lösung

Diese Aufgabe wird durch die Vorrichtung zum Bestimmen einer rheologischen Eigenschaft einer Suspension aus Fasern umfassendem Material zum Herstellen von Behältern gemäß unabhängigen Anspruch 1 und dem Verfahren zum Bestimmen einer rheologischen Eigenschaft einer Suspension aus Fasern umfassendem Material zum Herstellen von Behältern gemäß unabhängigem Anspruch 8 gelöst. Bevorzugte Weiterbildungen sind in den abhängigen Ansprüchen erfasst.

Die erfindungsgemäße Vorrichtung zum Bestimmen einer rheologischen Eigenschaft einer Suspension aus Fasern umfassendem Material zum Herstellen von Behältern umfasst einen Tank zum Speichern der Suspension aus Fasern umfassendem Material und eine Steuereinheit, wobei der Tank eine Rührvorrichtung zum Rühren der Suspension aus Fasern umfassendem Material umfasst und die Steuereinheit ausgebildet ist, basierend auf einer Wechselwirkung zwischen der Rührvorrichtung und der Suspension aus Fasern umfassendem Material eine rheologische Eigenschaft der Suspension aus Fasern umfassendem Material zu bestimmen.

Unter der rheologischen Eigenschaft der Suspension aus Fasern umfassendem Material ist eine Fließeigenschaft und/oder eine Verformungseigenschaft der Suspension aus Fasern umfassendem Material zu verstehen. So kann es sich bei der rheologischen Eigenschaft beispielsweise um eine Viskosität, Dilatanz oder Strukturviskosität mit und ohne Fließgrenze handeln. Es kann sich jedoch auch um jede andere hier nicht explizit erwähnte rheologische Eigenschaft handeln. Es kann auch vorgesehen sein, dass mehr als eine rheologische Eigenschaft, insbesondere zwei, drei oder mehr rheologische Eigenschaften bestimmt werden.

Mit Fasern umfassendes Material können beispielsweise nachwachsende und/oder recycelte Naturstoffe auf pflanzlicher Basis, wie zum Beispiel zellstoffhaltige beziehungsweise cellulosehaltige Materialien gemeint sein, wobei es sich insbesondere um Naturfasern, wie zum Beispiel Pflanzenfasern, Papierfasern oder Holzfasern handeln kann. Die Fasern können auch Flocken sein oder diese umfassen. Die Fasern können auch verschiedene Abmessungen und/oder Formen aufweisen. Beispielsweise kann die Suspension auch Fasern mit einer bestimmten Partikelgrö-ßenverteilung umfassen. Das Fasern umfassende Material kann auch nicht nachhaltige Bestandteile, wie synthetische oder metallische Fasern umfassen. Vorzugsweise handelt es sich bei dem Fasern umfassendem Material um Pulpe oder Pappmache. Es kann sich jedoch auch um jedes andere Fasern umfassende Material handeln, welches zum Herstellen eines Behälters geeignet ist.

Die Suspension aus Fasern umfassendem Material kann neben den Fasern auch Wasser und ein Bindemittel umfassen. Die Suspension kann jedoch auch weitere Bestandteile, wie beispielsweise Additive oder andere Füllmaterialien umfassen. Bei dem Additiv kann es sich beispielsweise um Leim, Thixotropierungsmittel, Hydrophobisierungsmittel oder jedes andere Additiv umfassen, welches eine Wandung des Behälters aus Fasern umfassendem Materials verfestig, sich positiv auf eine Etikettierbarkeit des Behälters auswirkt, und/oder eine Flüssigkeits-, Licht- und/oder Gasbarriere in dem Behälter erzeugt und/oder sich vorteilhaft auf die Verarbeitbarkeit des Fasern umfassenden Materials auswirkt, beispielsweise eine Anschwemmbarkeit des Fasern umfassenden Materials verbessern. Bei dem Füllmaterial kann es sich beispielsweise um Stärke, Kreide, Biozide oder auch jedes andere Füllmaterial handeln.

Der Behälter kann vorzugsweise eine in der Getränkeindustrie verwendete Flasche sein, wobei diese Art der Ausgestaltung nicht als beschränkend zu verstehen ist. Die Suspension aus Fasern umfassendem Material kann auch zum Herstellen jeder anderen Art von Behälter geeignet sein. Beispielsweise kann es sich bei dem Behälter auch um eine in der Getränke-, Pharma-, Gesundheits- oder Lebensmittelindustrie verwendete Dose, Tube oder Becher oder jede andere Art von Behälter handeln.

Die Rührvorrichtung zum Rühren der Suspension aus Fasern umfassendem Material kann ausgebildet sein, flüssige und feste Bestandteile der Suspension gleichmäßig zu dispergieren. Die Rührvorrichtung kann zudem ausgebildet sein, die Partikelgröße der festen Bestandteile während dem Rühren zu reduzieren. Zum Dispergieren und Zerkleinern der festen Bestandteile der Suspension kann die Rührvorrichtung ein Rührwerkzeug umfassen.

Unter Wechselwirkung ist eine Wechselwirkung zwischen Rührvorrichtung und der Suspension aus Fasern umfassendem Material zu verstehen, welche zumindest ein teilweises Durchmischen der Suspension aus Fasern umfassendem Material in dem Tank bewirkt. Bei der Wechselwirkung kann es sich beispielsweise um eine auf eine Oberfläche der Suspension durch die Rührvorrichtung ausgeübte Kraft handeln. Beispielsweise kann es sich um eine Schubspannung handeln. Es kann sich auch um Betriebsparameter der Rührvorrichtung handeln, welche mit der Schubspannung in direkter Verbindung stehen. Bei der Wechselwirkung kann es sich auch um eine durch die Rührvorrichtung bewirkte Scherrate der Suspension handeln. Es kann sich auch um Betriebsparameter der Rührvorrichtung handeln, welche mit der Scherrate in direkter Verbindung stehen.

Da die rheologische Eigenschaft der Suspension aus Fasern umfassendem Material in direkter Verbindung mit einem Verarbeitungszustand, beispielsweise einem physikalischen Parameter, der Suspension aus Fasern umfassendem Material steht, kann durch Bestimmung der rheologischen Eigenschaft auf einfache und präzise Weise festgestellt werden, ob die Suspension einen gewünschten Verarbeitungszustand aufweist. So kann beispielsweise anhand der rheologischen Eigenschaft bestimmt werden, ob die Suspension hinreichend dispergiert ist und der Quellvorgang eines Feststoffbestandteils der Suspension und/oder der Vernetzungsvorgang eines Additivs abgeschlossen ist. Mittels der rheologischen Eigenschaft kann ferner die Konzentration des Fasern umfassenden Materials und/oder der flüssigen Phase der Suspension aus Fasern umfassendem Material bestimmt werden. Basierend auf dem bestimmten Verarbeitungszustand kann somit eine eindeutige Charakterisierung der Suspension erfolgen und auch ihre Qualität, beispielsweise mittels einer binären ja oder nein Entscheidung als hinreichend oder nicht hinreichend beurteilt werden. Da die Qualität der Suspension wiederum mit der Qualität der aus der Suspension hergestellten Behälter korreliert, ist deren genaue Charakterisierung von hoher Wichtigkeit.

In einer Ausführungsform kann es sich bei der rheologischen Eigenschaft um eine Viskosität der Suspension aus Fasern umfassendem Material handelt. Während des Dispergierens beziehungsweise Ausmischen der Suspension und des Quellvorgangs der in der Suspension enthaltenen Feststoffe verändert sich die Viskosität. Ist die Suspension hinreichend dispergiert und der Quellvorgang abgeschlossen nimmt die Viskosität einen konstanten Wert an. Die Viskosität stellt somit einen geeigneten Parameter dar, um einen Verarbeitungszustand der Suspension eindeutig zu charakterisieren.

In einer Ausführungsform kann es sich bei der Wechselwirkung um ein Drehmoment, um eine Leistungsaufnahme oder um einen Stromverbrauch handeln, welches durch die Rührvorrichtung aufgewendet werden muss, um eine bestimmte Drehzahl der Rührvorrichtung beim Rühren der Suspension zu erreichen und/oder um eine Drehzahl der Rührvorrichtung, welche mit einem vorgegebenen Drehmoment, einer vorgegebenen Leistungsaufnahme oder einem vorgegebenen Stromverbrauch erreicht werden kann. Diese Messgrößen können in direkte Verbindung zu einer rheologischen Eigenschaft, wie zum Beispiel der Viskosität gesetzt werden, und stellen somit besonders geeignete Parameter zum Bestimmen der rheologischen Eigenschaft dar.

In einer Ausführungsform kann die Steuereinheit ausgebildet sein, eine Veränderung der rheologischen Eigenschaft innerhalb eines bestimmten Zeitintervalls zu bestimmen. Durch Bestimmen einer Veränderung der rheologischen Eigenschaft mit der Zeit, können Informationen über den zeitlichen Verlauf eines Verarbeitungszustands der Suspension aus Fasern umfassendem Material gewonnen werden.

In einer Ausführungsform kann die Steuereinheit ausgebildet sein, einen Gleichgewichtswert der rheologischen Eigenschaft der Suspension aus Fasern umfassendem Material zu bestimmen, wenn die Veränderung der rheologischen Eigenschaft innerhalb des bestimmten Zeitintervalls unter einem ersten Schwellenwert liegt. Sind die flüssigen und festen Bestandteile der Suspension vollständig dispergiert sind und der Quellvorgang der Feststoffbestandteile abgeschlossen, so konvergiert die rheologische Eigenschaft gegen eine Konstante oder verändert sich nur noch geringfügig mit der Zeit. Durch das Messen der rheologischen Eigenschaft kann somit präzise bestimmt werden, wann die Suspension hinreichend dispergiert und der Quellvorgang abgeschlossen ist.

In einer Ausführungsform kann ein Feststoffgehalt und/oder ein Flüssigkeitsgehalt der Suspension aus Fasern umfassendem Material verändert werden, wenn der Gleichgewichtswert um wenigstens einen zweiten Schwellenwert von einem Sollwert abweicht. Auch wenn die Suspension hinreichend dispergiert ist und der Quellvorgang abgeschlossen ist, kann es sein, dass der Feststoff- und/oder der Flüssigkeitsgehalt zu niedrig oder zu hoch eingestellt wurde. Durch den Vergleich mit dem Sollwert können Informationen über die Zusammensetzung der Suspension gewonnen und diese bei Bedarf korrigiert werden.

In einer Ausführungsform kann die Vorrichtung eine Einrichtung zum Herstellen eines Behälters umfassen, wobei der Tank mit der Einrichtung zum Herstellen des Behälters über eine Abführleitung verbunden ist und die Suspension aus Fasern umfassendem Material der Einrichtung zum Herstellen des Behälters zugeführt werden kann, wenn der Gleichgewichtswert um weniger als einen zweiten Schwellenwert von einem Sollwert abweicht. Somit kann sichergestellt werden, dass der Einrichtung zum Herstellen nur eine Suspension aus Fasern umfassenden Material zugeführt wird, welche einen gewünschten Verarbeitungszustand beziehungsweise eine hinreichende Qualität aufweist und sichergestellt werden, dass mit der Einrichtung Behälter mit gleichbleibend hoher Qualität erzeugt werden.

Bei dem erfindungsgemäßen Verfahren zum Bestimmen einer rheologischen Eigenschaft einer Suspension aus Fasern umfassendem Material zum Herstellen von Behältern, wird die Suspension aus Fasern umfassendem Material in einem Tank gespeichert und mittels einer Rührvorrichtung in dem Tank gerührt, wobei mittels einer Steuereinheit basierend auf einer Wechselwirkung zwischen der Rührvorrichtung und der Suspension aus Fasern umfassendem Material eine rheologische Eigenschaft der Suspension aus Fasern umfassendem Material bestimmt wird.

Da die rheologische Eigenschaft eindeutige Informationen über den Verarbeitungszustand der Suspension aus Fasern umfassendem Material liefert, stellt die Messung der rheologische Eigenschaft eine einfache und präzise Möglichkeit dar, die Suspension hinsichtlich eines gewünschten Verarbeitungszustand beziehungsweise einer gewünschten Qualität zu charakterisieren.

In einer Ausführungsform kann es sich bei der rheologischen Eigenschaft um eine Viskosität der Suspension aus Fasern umfassendem Material handeln. Da die Viskosität unter anderem mit dem Dispergierungsgrad und einem Feststoffanteil der Suspension, dem Quellungsgrad eines Feststoffanteils der Suspension und/oder einer Partikelgrößenverteilung der Suspension korreliert, stellt diese einen besonders geeigneten Parameter zum Bestimmen eines Verarbeitungszustands der Suspension beziehungsweise deren Qualität dar.

In einer Ausführungsform kann es sich bei der Wechselwirkung um ein Drehmoment, um eine Leistungsaufnahme oder um einen Stromverbrauch handeln, welches durch die Rührvorrichtung aufgewendet wird, um eine bestimmte Drehzahl der Rührvorrichtung beim Rühren der Suspension zu erreichen und/oder um eine Drehzahl der Rührvorrichtung, welche mit einem vorgegebenen Drehmoment, einer vorgegebenen Leistungsaufnahme oder einem vorgegebenen Stromverbrauch erreicht werden kann. Diese Messgrößen können in direkte Verbindung zu einer rheologischen Eigenschaft, wie zum Beispiel der Viskosität gesetzt werden, und stellen somit besonders geeignete Parameter zum Bestimmen der rheologischen Eigenschaft dar.

In einer Ausführungsform kann es vorgesehen sein, dass durch die Steuereinheit eine Veränderung der rheologischen Eigenschaft innerhalb eines bestimmten Zeitintervalls bestimmt wird. Durch Bestimmen einer Veränderung der rheologischen Eigenschaft mit der Zeit, können Informationen über den zeitlichen Verlauf eines Verarbeitungszustands der Suspension aus Fasern umfassendem Material gewonnen werden.

In einer Ausführungsform kann es vorgesehen sein, dass durch die Steuereinheit ein Gleichgewichtswert der rheologischen Eigenschaft der Suspension aus Fasern umfassendem Material bestimmt wird, wenn die Veränderung der rheologischen Eigenschaft innerhalb des bestimmten Zeitintervalls unterhalb eines ersten Schwellenwertes liegt. Ist die Suspension hinreichend dispergiert und/oder ein Quellvorgang eines Feststoffanteils der Suspension abgeschlossen konvergiert die rheologische Eigenschaft gegen eine Konstante. Durch Messen der rheologischen Eigenschaft kann somit präzise bestimmt werden, wann die Suspension hinreichend dispergiert und der Quellvorgang abgeschlossen ist.

In einer Ausführungsform kann es vorgesehen sein, dass ein Feststoffgehalt und/oder ein Flüssigkeitsgehalt der Suspension aus Fasern umfassendem Material verändert wird, wenn der Gleichgewichtswert um wenigstens einen zweiten Schwellenwert von einem Sollwert abweicht. Auch wenn die Suspension hinreichend dispergiert ist und der Quellvorgang abgeschlossen ist, kann es sein, dass der Feststoff- und/oder der Flüssigkeitsgehalt zu niedrig oder zu hoch eingestellt wurde. Durch den Vergleich mit dem Sollwert können Informationen über die Zusammensetzung der Suspension gewonnen und diese bei Bedarf korrigiert werden.

In einer Ausführungsform kann es vorgesehen sein, dass die Suspension aus Fasern umfassendem Material aus dem Tank einer Einrichtung zum Herstellen des Behälters über eine Abführleitung zugeführt wird, wenn der Gleichgewichtswert um weniger als einen zweiten Schwellenwert von einem Sollwert abweicht. Somit kann sichergestellt werden, dass der Einrichtung zum Herstellen des Behälters nur eine Suspension aus Fasern umfassenden Material zugeführt wird, welche einen gewünschten Verarbeitungszustand beziehungsweise eine hinreichende Qualität aufweist und somit sichergestellt werden, dass mit der Einrichtung Behälter mit gleichbleibend hoher Qualität erzeugt werden.

In einer Ausführungsform kann es vorgesehen sein, dass die Abführleitung eine Pumpvorrichtung zur Förderung der Suspension aus Fasern umfassendem Material von dem Tank zu der Einrichtung zum Herstellen des Behälter umfasst und die rheologische Eigenschaft der Suspension aus Fasern umfassendem Material in der Abführleitung mittels einer Energieaufnahme der Pumpvorrichtung zur Qualitätskontrolle bestimmt wird und/oder wobei die Leitung einen Sensor umfasst und die rheologische Eigenschaft der Suspension aus Fasern umfassendem Material in der Abführleitung mittels des Sensors zur Qualitätskontrolle bestimmt wird. Durch die Qualitätskontrolle der Suspension aus Fasern umfassendem Material kann ein zusätzlicher Kontrollmechanismus implementiert werden, um sicherzustellen, dass die Suspension eine hinreichend hohe Qualität aufweist, wenn diese der Einrichtung zum Herstellen der Behälter zugeführt wird.

## Kurze Figurenbeschreibung

Fig. 1    Vorrichtung zum Bestimmen einer rheologischen Eigenschaft einer Suspension aus Fasern umfassendem Material zum Herstellen von Behältern gemäß einer Ausführungsform;

Fig. 2    Vorrichtung zum Bestimmen einer rheologischen Eigenschaft einer Suspension aus Fasern umfassendem Material zum Herstellen von Behältern gemäß einer weiteren Ausführungsform

## Ausführliche Figurenbeschreibung

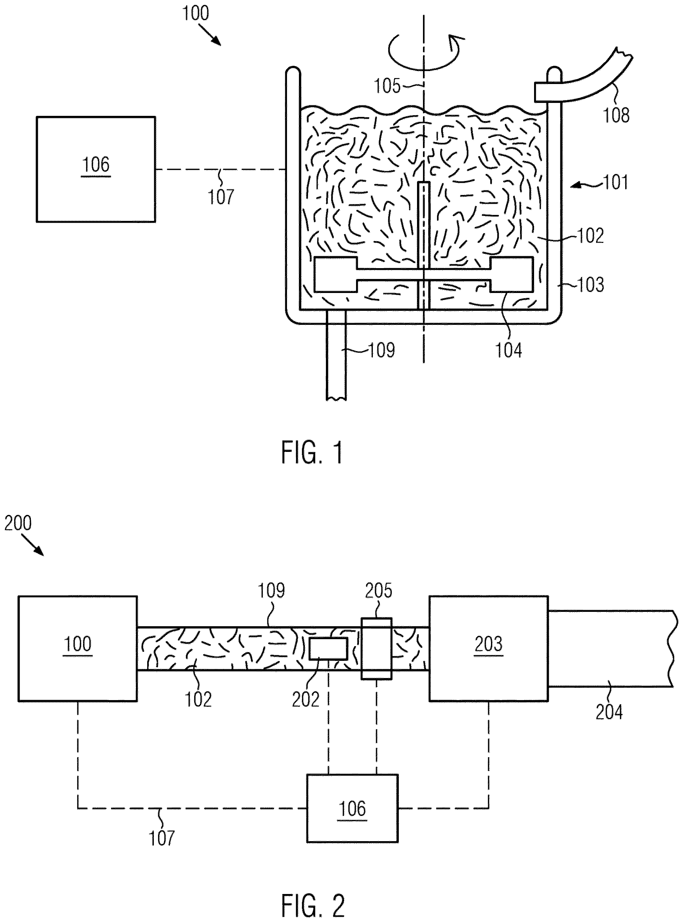

Fig. 1 zeigt eine Vorrichtung 100 zum Bestimmen einer rheologischen Eigenschaft einer Suspension aus Fasern umfassendem Material 102 zum Herstellen von Behältern gemäß einer Ausführungsform.

Erfindungsgemäß umfasst die Vorrichtung 100 einen Tank 101 zum Speichern der Suspension aus Fasern umfassendem Material 102 und eine Steuereinheit 106. Der Tank 101 umfasst wiederum eine Rührvorrichtung 104 zum Rühren der Suspension aus Fasern umfassendem Material 102. Der Tank 101 kann einen Tankkörper 103 umfassen, in welchen die Rührvorrichtung 104 eingelassen sein kann. Die Steuereinheit 106 ist erfindungsgemäß ausgebildet basierend auf einer Wechselwirkung zwischen der Rührvorrichtung 104 und der Suspension aus Fasern umfassendem Material 102 eine rheologische Eigenschaft der Suspension aus Fasern umfassendem Material zu bestimmen.

Optional kann der Tank 101 eine Zufuhrleitung 108 für die Suspension aus Fasern umfassendem Material 102 umfassen. Während im Zusammenhang mit der in der Figur 1 beschriebenen Ausführungsform eine optionale Zuführleitung 108 vorgesehen ist, können in einer alternativen Ausführungsform auch mehrere optionale Zuführleitungen 108, wie beispielsweise 2, 3 oder 5 Zuführleitungen vorgesehen sein, über welche die verschiedenen Bestandteile der Suspension 102, wie flüssige und feste Bestandteile, dem Tank 101 separat zugeführt werden können. Dies bringt den Vorteil mit sich, dass ein Feststoff- beziehungsweise Flüssigkeitsanteil der Suspension flexibel eingestellt werden kann. Ebenfalls optional kann eine Abführleitung 109 vorgesehen sein, mittels welcher die Suspension aus Fasern umfassendem Material 102 aus dem Tank 101 abgeführt werden kann. Die in der Figur 1 gezeigte Anordnung der Zuführ- 108 und Abführleitung 109 ist als beispielhaft zu verstehen. Die Zuführ- und Abführleitungen können auch an jeder anderen Position des Tanks 101 angeordnet sein. Ferner kann der Tank 101 eine optionale externe Kreislaufleitung umfassen, mittels welcher die in dem Tank 101 gespeicherte Suspension aus Fasern umfassendem Material zusätzlich umgewälzt werden kann. Optional kann die Kreislaufleitung einen Sensor zum Bestimmen einer rheologischen Eigenschaft der Suspension aus Fasern umfassendem Material bestimmen.

Auch die nach oben hin geöffnete Ausgestaltung des Tankkörpers 103 und dessen Form ist als beispielhaft zu verstehen. Der Tankkörper 103 kann auch jede andere Form annehmen und beispielsweise auch nach oben hin geschlossen sein, wodurch eine mögliche Kontamination der in dem Tank 101 gespeicherten Suspension aus Fasern umfassendem Material 102 verhindert werden kann.

Unter der rheologischen Eigenschaft der Suspension aus Fasern umfassendem Material 102 ist eine Fließeigenschaft und/oder eine Verformungseigenschaft der Suspension aus Fasern umfassendem Material 102 zu verstehen. Bei der rheologischen Eigenschaft kann es sich beispielsweise um eine Viskosität, Dilatanz oder Strukturviskosität mit und ohne Fließgrenze handeln. Es kann sich jedoch auch um jede andere hier nicht explizit erwähnte rheologische Eigenschaft handeln. Es kann auch vorgesehen sein, dass mehr als eine rheologische Eigenschaft, insbesondere zwei, drei oder mehr rheologische Eigenschaften bestimmt werden.

Mit Fasern umfassendem Material können beispielsweise nachwachsende und/oder recycelte Naturstoffe auf pflanzlicher Basis, wie zum Beispiel zellstoffhaltige beziehungsweise cellulosehaltige Materialien gemeint sein, wobei es sich insbesondere um Naturfasern, wie zum Beispiel Pflanzenfasern, Papierfasern oder Holzfasern handeln kann. Die Fasern können auch Flocken sein oder diese umfassen. Das Fasern umfassende Material kann auch nicht nachhaltige Bestandteile, wie synthetische oder metallische Fasern umfassen. Vorzugsweise handelt es sich bei dem Fasern umfassendem Material um Pulpe oder Pappmaché. Es kann sich jedoch auch um jedes andere Fasern umfassende Material handeln, welches zum Herstellen eines Behälters geeignet ist.

Die Suspension aus Fasern umfassendem Material 102 kann neben dem Fasern umfassendem Material auch Wasser und ein Bindemittel umfassen. Die Suspension kann jedoch auch weitere Bestandteile, wie beispielsweise Additive umfassen. Bei dem Additiv kann es sich beispielsweise um Leim, Thixotropierungsmittel, Hydrophobisierungsmittel oder jedes andere Additiv handeln, welches eine Wandung des Behälters aus Fasern umfassendem Materials verfestigt, sich positiv auf eine Etikettierbarkeit des Behälters auswirkt, eine Flüssigkeits-, Licht- und/oder Gasbarriere erzeugt und/oder eine Verarbeitbarkeit der Suspension aus Fasern umfassendem Material, wie beispielsweise eine Anschwemmbarkeit, verbessert.

Bei dem Behälter handelt es sich vorzugsweise um eine in der Getränkeindustrie verwendete Flasche. Es kann sich jedoch auch um jeden anderen Behälter handeln, beispielsweise eine in der Getränke-, Pharma-, Gesundheits- oder Lebensmittelindustrie verwendete Dose, Tube oder Becher handeln.

Unter Wechselwirkung ist eine Wechselwirkung zwischen Rührvorrichtung 104 und der Suspension 102 zu verstehen, welche zumindest ein teilweises Durchmischen der Suspension aus Fasern umfassendem Material 102 in dem Tank 101 bewirkt. Bei der Wechselwirkung kann es sich beispielsweise um eine auf eine Oberfläche der Suspension durch die Rührvorrichtung ausgeübte Kraft handeln. Beispielsweise kann es sich um eine Schubspannung handeln. Es kann sich auch um Betriebsparameter der Rührvorrichtung handeln, welche mit der Schubspannung in direkter Verbindung stehen. Bei der Wechselwirkung kann es sich auch um eine durch die Rührvorrichtung bewirkte Scherrate der Suspension handeln. Es kann sich auch um einen Betriebsparameter der Rührvorrichtung handeln, welcher mit der Scherrate in direkter Verbindung steht.

In der in der Fig. 1 beschriebenen Ausführungsform ist die Rührvorrichtung 104 als Scheibenrührer ausgestaltet, welche um eine Achse 105 rotiert werden kann. Diese spezifische Ausgestaltungsart der Rührvorrichtung 104 kann sich vorteilhaft auf den Dispergiervorgang der Suspension aus Fasern umfassendem Material 102 auswirken. In einer alternativen Ausführungsform kann die Rührvorrichtung 104 beispielsweise auch als Schrägblatt-, Propellor- Anker- oder Wendelrührer ausgeführt sein. Auch jede andere hier nicht explizit aufgeführte Ausgestaltungsart des Rührvorrichtung 104, welche zum dispergieren der festen und flüssigen Bestandteile der Suspension aus Fasern umfassendem Material geeignet ist, kann vorgesehen sein. In einer Ausführungsform kann es auch vorgesehen sein, dass mehr als eine Rührvorrichtung 104 in dem Tank 101 vorgesehen ist.

Die Steuereinheit 106 kann als Computer- oder Serversystem ausgeführt sein und über eine Kabel- oder Drahtlosverbindung 107 mit den verschiedenen Komponenten der Vorrichtung 100, welche gesteuert beziehungsweise geregelt werden können und/oder von welchen Daten ausgelesen werden können, verbunden sein. Mit Komponente kann beispielsweise der Tank 101 beziehungsweise die Rührvorrichtung 104 gemeint sein. Beispielsweise kann die Steuereinheit 106 ausgebildet sein, einen Betriebsparameter der Rührvorrichtung 104, wie beispielsweise ein Drehmoment, eine Drehzahl, einen Stromverbrauch und/oder eine Leistungsaufnahme und auch jeden anderen hier nicht explizit aufgeführten Betriebsparameter der Rührvorrichtung 104 auszulesen oder zu steuern beziehungsweise zu regeln. Ferner kann die Steuereinheit 106 ausgebildet sein, einen bestimmten Betriebsparameter der Rührvorrichtung 104 derart zu regeln, dass eine bestimmte Drehzahl der Rührvorrichtung 104 beim Rühren der Suspension aus Fasern umfassendem Material erreicht werden kann und/oder die Drehzahl der Rührvorrichtung 104 derart zu regeln, dass ein bestimmter Wert des Betriebsparameters erreicht werden kann.

Erfindungsgemäß ist die Steuereinheit 106 ausgebildet basierend auf einer Wechselwirkung zwischen der Rührvorrichtung 104 und der Suspension aus Fasern umfassendem Material 102 eine rheologische Eigenschaft der Suspension aus Fasern umfassendem Material 102 zu bestimmen.

Bei der Wechselwirkung kann es sich beispielsweise um ein Drehmoment, eine Leistungsaufnahme oder ein Stromverbrauch handeln, welches durch die Rührvorrichtung aufgewendet werden muss, um eine bestimmte Drehzahl der Rührvorrichtung beim Rühren der Suspension zu erreichen und/oder eine Drehzahl der Rührvorrichtung, welche mit einem vorgegebenen Drehmoment, einer vorgegebenen Leistungsaufnahme oder einem vorgegebenen Stromverbrauch erreicht werden kann.

Die Steuereinheit 106 kann eine Speichervorrichtung umfassen. In der Speichervorrichtung kann eine Datenbank hinterlegt sein, wobei in der Datenbank wenigstens einer Wechselwirkung zwischen der Rührvorrichtung 104 und der Suspension aus Fasern umfassendem Material 102 eine entsprechende rheologische Eigenschaft zugeordnet sein kann. Beispielsweise kann wenigstens einem bestimmten Drehmoment, welches notwendig ist, um eine bestimmte Drehzahl der Rührvorrichtung 104 zu erreichen, ein entsprechender Viskositätswert zugeordnet sein. Entsprechend kann auch wenigstens einem Stromverbrauch und/oder wenigstens einer Leistungsaufnahme, welche notwendig ist, um eine bestimmte Drehzahl der Rührvorrichtung 104 zu erreichen, ein entsprechender Viskositätswert zugeordnet sein. Wenigstens einer rheologischen Eigenschaft der Suspension aus Fasern umfassendem Material kann in der Datenbank wiederum ein bestimmter Verarbeitungszustand der Suspension zugeordnet sein. Der Verarbeitungszustand kann beispielsweise eine Feststoffkonzentration, einen Dispersionsgrad, einen Quellungsgrad der Suspension aus Fasern umfassendem Material, und/oder einen Vernetzungsgrad eines optionalen Additives umfassen. Wenigstens einem Verarbeitungszustand der Suspension aus Fasern umfassendem Material kann in der Datenbank wiederum ein bestimmter Qualitätswert der Suspension zugeordnet sein. Der Qualitätswert kann beispielsweise binär als hinreichend oder nicht hinreichend klassifiziert sein. Somit kann die Steuereinheit nicht nur ausgebildet sein basierend auf der Wechselwirkung eine rheologische Eigenschaft zu bestimmen, sondern auch einen Verarbeitungszustand beziehungsweise eine Qualität der Suspension zu bestimmen. Die genaue Charakterisierung der Suspension und die Bestimmung deren Qualität ist eine grundlegende Voraussetzung um Behälter gleichbleibend hoher Qualität mittels der Suspension 102 erzeugen zu können.

In einer Ausführungsform kann es vorgesehen sein, dass die Steuereinheit 106 eine künstliche Intelligenz umfasst und der künstlichen Intelligenz die Wechselwirkung zwischen Suspension und Fasern umfassendem Material, beispielsweise ein Drehmoment, welches die Rührvorrichtung 104 aufwenden muss, um eine bestimmte Drehzahl der Rührvorrichtung 104 zu erreichen als Parameter zugeführt wird. Die künstliche Intelligenz kann ausgebildet sein, basierend auf diesem Parameter die rheologische Eigenschaft zu bestimmen. In einer Ausführungsform kann es vorgesehen sein, dass die künstliche Intelligenz basierend auf der rheologischen Eigenschaft einen Verarbeitungszustand der Suspension, beispielsweise einen Dispersionsgrad der Suspension, einen Quellgrad eines in der Suspension enthaltenen Feststoffanteils und/oder einen Vernetzungsgrad eines optional in der Suspension enthaltenen Additives zu bestimmen. Die künstliche Intelligenz kann zudem ausgebildet sein, zu bestimmen, ob der Verarbeitungszustand einem gewünschten Verarbeitungszustand entspricht und die Suspension eine gewünschte Qualität aufweist. Die künstliche Intelligenz kann mittels verschiedener Wechselwirkungsdatensätzen, welche an verschiedenen Suspensionen aus Fasern umfassendem Material unterschiedlicher Zusammensetzungen und/oder unterschiedlicher Verarbeitungszustände gemessen wurden, trainiert sein. Bei der künstlichen Intelligenz kann es sich in einer Ausführungsform um ein neuronales Netz handeln.

Alternativ kann es auch vorgesehen sein, dass die Steuereinheit 106 einen deterministischen Algorithmus umfasst, welchem die Wechselwirkung zwischen Rührvorrichtung 104 und der Suspension aus Fasern umfassendem Material 102 als Parameter zur Verfügung gestellt werden kann und welcher basierend auf zur Verfügung gestellten Parameter eine rheologische Eigenschaft der Suspension 102 bestimmen kann. Der deterministische Algorithmus kann zudem ausgebildet sein, basierend auf der rheologischen Eigenschaft einen Verarbeitungszustand und/oder eine Qualität der Suspension zu bestimmen.

In einer Ausführungsform kann die rheologische Eigenschaft eine Viskosität der Suspension 102 sein. Die Viskosität ist eine besonders geeignete rheologische Größe, um einen Verarbeitungszustand der Suspension aus Fasern umfassendem Material zu bestimmen und zu überprüfen, beziehungsweise um eine Aussage über die Qualität der Suspension aus Fasern umfassendem Material zu treffen. Dies liegt darin begründet, dass sich die Viskosität der Suspension 102 während des Dispergierens beziehungsweise des Ausmischens der Suspension 102 und während des Quellvorgangs der in der Suspension 102 enthaltenen Feststoffe beziehungsweise während eines Vernetzungsvorgangs optional in der Suspension enthaltener Additive verändert. Ist die Suspension dagegen hinreichend dispergiert und der Quell- beziehungsweise Vernetzungsvorgang abgeschlossen, konvergiert die Viskosität gegen einen konstanten Wert, so dass mittels der Messung der Viskosität auf besonders präzise Weise ermittelt werden kann, ob die Suspension 102 einen gewünschten Verarbeitungszustand beziehungsweise eine gewünschte Qualität aufweist.

Zur Bestimmung des rheologischen Parameters, beispielsweise der Viskosität, kann es in einer Ausführungsform vorgesehen sein, dass mittels der Steuereinheit 106 ein Drehmoment, eine Leistungsaufnahme oder ein Stromverbrauch bestimmt wird, welche durch die Rührvorrichtung aufgewendet werden muss, um eine bestimmte Drehzahl der Rührvorrichtung 104 zu erreichen. Alternativ kann es auch vorgesehen sein, dass die Steuereinheit 106 eine Drehzahl der Rührvorrichtung bestimmt, welche mit einem vorgegebenen Drehmoment, einer vorgegebenen Leistungsaufnahme oder einem vorgegebenen Stromverbrauch erreicht werden kann. Hierfür kann die Steuereinheit 106 beispielsweise auf die in Speichereinheit hinterlegte Datenbank zugreifen. Zudem kann die Steuereinheit 106 zum Bestimmen der rheologischen Eigenschaft allgemein bekannte physikalische Zusammenhänge nutzen, wie dies am Beispiel der Viskosität, des Drehmoments und der Drehzahl im Folgenden kurz erläutert wird.

Für die Viskosität $\eta$ gilt folgender Zusammenhang:

$$\eta = \frac{\tau}{\dot{\gamma}}$$

wobei $\tau$ die Schubspannung und $\dot{\gamma}$ die Scherrate beschreibt, wobei die Schubspannung $\tau$ proportional zu dem durch die Rührvorrichtung 104 aufgewendeten Drehmoment M und die Scherrate proportional zu der Drehzahl $n$, mit welcher die Rührvorrichtung 104 zum Rühren der Suspension 102 gedreht wird, ist.

Bestimmt die Steuereinheit 106 nun das Drehmoment, welches durch die Rührvorrichtung 104 aufgewendet werden muss, um eine bestimmte Drehzahl, beispielsweise 60 Umdrehungen pro Minute, 120 Umdrehungen pro Minute, 240 Umdrehungen pro Minute oder 360 Umdrehungen pro Minute zu erreichen, kann die Steuereinheit 106 mittels des oben angegebenen Zusammenhangs die Viskosität der Suspension aus Fasern umfassendem Material 102 bestimmt.

Alternativ kann es auch vorgesehen sein, dass die Steuereinheit 106 ein vorgegebenes Drehmoment $M$ der Rührvorrichtung 104 einstellt und die Drehzahl $n$ mit welcher die Rührvorrichtung 104 gedreht wird bestimmt und basierend auf dem oben gegebenen Zusammenhang die Viskosität der Suspension aus Fasern umfassendem Material 102 bestimmen kann.

Da die Viskosität der Suspension aus Fasern umfassendem Material 102 unter anderem mit einem Dispergierungsgrad der Suspension 102, einem Feststoffanteil der Suspension 102, einem Quellungsgrad eines Feststoffanteils der Suspension 102 und/oder einem Vernetzungsgrad eines optional in der Suspension enthaltenen Additivs korreliert, stellt diese einen besonders geeigneten Parameter zum Bestimmen eines Verarbeitungszustands der Suspension 102 beziehungsweise einer Qualität der Suspension dar. Insbesondere verändert sich der Wert der Viskosität mit der Zeit, wenn der Dispergierungs-, Quellungs-, und/oder Vernetzungsvorgang noch nicht vollständig abgeschlossen ist, und konvergiert gegen einen konstanten Wert, wenn der Dispergierungs-, Quellungs- und/oder Vernetzungsvorgang abgeschlossen ist. So ist es beispielsweise bekannt, dass sich mit zunehmendem Aufquellen des Fasern umfassendem Material, die Viskosität der Suspension aus Fasern umfassendem Material erhöht und gegen eine Konstante konvergiert, wenn der Quellvorgang des Fasern umfassendem Material abgeschlossen ist. Dieser Zusammenhang kann auch für andere rheologische Eigenschaften beobachtet werden.

Die Messung des zeitlichen Verlaufs der rheologischen Eigenschaft, wie beispielsweise der Viskosität, stellt somit eine besonders geeignete Methode dar, um den Verarbeitungszustand der Suspension aus Fasern umfassendem Material 102 zu überwachen, beziehungsweise zu bestimmen, wenn die Suspension 102 einen gewünschten Verarbeitungszustand und/oder eine bestimmte Qualität erreicht hat. Durch Bestimmen des zeitlichen Verlaufs des rheologischen Parameters basierend auf der Wechselwirkung zwischen der Suspension aus Fasern umfassendem Material 102 und der Rührvorrichtung 104 und unter Verwendung der in der Datenbank der Speichereinheit hinterlegten Daten und/oder allgemein bekannter physikalischer Zusammenhänge kann die Steuereinheit 106 somit bestimmen, ob ein gewünschter Verarbeitungszustand der Suspension 102 erreicht ist oder ob ein weiteres Rühren der Suspension 102 notwendig ist, um den gewünschten Verarbeitungszustand zu erreichen. Somit kann auch die Verarbeitungszeit der Suspension aus Fasern umfassendem Material optimiert werden.

Hierfür kann die Steuereinheit 106 ausgebildet sein einen Gleichgewichtswert der rheologischen Eigenschaft der Suspension aus Fasern umfassendem Material 102 zu bestimmen, wenn die Veränderung der rheologischen Eigenschaft innerhalb des bestimmten Zeitintervalls unter einem ersten Schwellenwert liegt. Wie bereits oben beschrieben, konvergiert die rheologische Eigenschaft gegen einen konstanten Wert, wenn der Dispergierungs- Quellungs- und/oder Vernetzungsvorgang abgeschlossen ist. Bei einer nur geringfügigen Änderung der rheologischen Eigenschaft mit der Zeit, beispielsweise eine Änderung pro Minute, welche kleiner 1% oder kleiner 0,1% oder kleiner 0,01 % eines Absolutwertes der rheologischen Eigenschaft sein kann, kann durch die Steuereinheit 106 bestimmt werden, dass die Suspension einen Gleichgewichtszustand aufweist und der Dispergierungs-, Quellungs- und/oder Vernetzungsvorgang abgeschlossen ist.

In manchen Fällen kann es jedoch auch vorkommen, dass die Suspension 102 zwar hinreichend dispergiert ist und auch der Dispergierungs-, Quellungs-, und/oder Vernetzungsvorgang abgeschlossen ist, die Suspension jedoch nicht eine gewünschte Feststoff- und/oder Flüssigkeitskonzentration aufweist. Beispielsweise kann der Feststoffanteil der Suspension zu hoch oder zu niedrig sein. Um diesem Fall Rechnung zu tragen, kann die Steuereinheit 106 ausgebildet sein, den Gleichgewichtswert mit einem in der Datenbank hinterlegten Sollwert zu vergleichen, wodurch bestimmt werden kann, ob die Suspension 102 eine gewünschte Feststoff- und/oder Flüssigkeitskonzentration aufweist. Stellt die Steuereinheit 106 bei dem Vergleich fest, dass der Gleichgewichtswert um wenigstens einen zweiten Schwellenwert von dem Sollwert abweicht, dann kann die Steuereinheit 106 bestimmen, dass die Feststoffbeziehungsweise Flüssigkeitskonzentration nicht einem gewünschten Wert entspricht und ein Feststoffgehalt und/oder ein Flüssigkeitsgehalt der Suspension aus Fasern umfassendem Material verändert werden.

Stellt die Steuereinheit 106 fest, dass der bestimmte Gleichgewichtswert um weniger als den zweiten Schwellenwert von dem Sollwert abweicht, dann kann die Steuereinheit 106 ausgebildet sein zu bestimmen, dass die Suspension aus Fasern umfassendem Material 102 einen gewünschten Verarbeitungszustand erreicht hat.

Die Suspension 102 kann dann beispielsweise einer anderen Einrichtung zur Weiterverarbeitung zugeführt werden. Hierfür kann die Suspension über die Abführleitung 109 aus der Vorrichtung 100 abgeführt werden. Optional kann an einem Ausgang des Tanks 101 mit welchem die Abführleitung 109 verbunden ist, ein Ventil angeordnet sein. Stellt die Steuereinheit 106 wie im eben beschriebenen Fall fest, dass die Qualität der Suspension 102 hinreichend ist, kann die Steuereinheit 106 ausgebildet sein, das Ventil zu öffnen, so dass die Suspension über die Abführleitung 109 aus dem Tank 101 abgeführt werden kann.

Dieser Fall wird nun im Zusammenhang mit der Figur 2 genauer beschrieben.

Figur 2 zeigt eine Vorrichtung 200 zum Bestimmen einer rheologischen Eigenschaft einer Suspension aus Fasern umfassendem Material zum Herstellen von Behältern gemäß einer weiteren Ausführungsform.

Die Vorrichtung 200 umfasst neben der im Zusammenhang mit der Figur 1 beschriebenen Vorrichtung 100 eine Einrichtung 203 zum Herstellen eines Behälters aus der Suspension aus Fasern umfassendem Material 102, wobei die Suspension 102 der Einrichtung zum Herstellen des Behälters 203 über Abführleitung 109 zugeführt werden kann. Hierfür kann in der Abführleitung 109 kann eine Pumpvorrichtung 205 zum Fördern der Suspension aus Fasern umfassendem Material 102 vorgesehen sein. Ferner kann in der Abführleitung 109 ein Sensor 202 zum Bestimmen einer rheologischen Eigenschaft der Suspension aus Fasern umfassendem Material 102 in der Abführleitung 109 angeordnet sein.

Entsprechend der im Zusammenhang mit der Figur 1 beschriebenen Ausführungsform, kann die Steuereinheit 106 auch mit den in der Figur 2 gezeigten steuerbaren und/oder auslesbaren Komponenten der Vorrichtung 200 über eine kabelgebundene oder drahtlose Verbindung 107 verbunden sein. Beispielsweise kann die Steuereinheit 106 mit der Vorrichtung 100, der Pumpvorrichtung 205, dem Sensor 202 und/oder der Einrichtung zum Herstellen des Behälters 203 verbunden sein.

Zur Qualitätskontrolle, der von der Vorrichtung 100 der Abführleitung 109 zugeführten Suspension 102, kann es vorgesehen sein, dass die Steuereinheit 106 ausgebildet ist, eine Energieaufnahme der Pumpvorrichtung 205 zum Fördern der Suspension aus Fasern umfassendem Material 102 zu bestimmen und basierend auf der Energieaufnahme der Pumpvorrichtung 205 eine rheologische Eigenschaft der Suspension aus Fasern umfassendem Material 102 zu bestimmen. Wie bereits weiter oben im Zusammenhang mit der Rührvorrichtung 104 beschrieben, korreliert die rheologische Eigenschaft der Suspension auch mit der Energieaufnahme der Pumpvorrichtung, durch welche die Suspension 102 gefördert wird. Folglich kann die Steuereinheit 106 auch anhand der Energieaufnahme eine rheologischen Eigenschaft der Suspension aus Fasern umfassendem Material 102 bestimmen und somit einen Verarbeitungszustand und/oder eine Qualität der Suspension aus Fasern umfassendem Material 102 bestimmen. Da die Zusammensetzung der Suspension 102 und/oder ihr Verarbeitungszustand in der Abführleitung 109 nicht mehr verändert werden kann, kann durch die Bestimmung der Energieaufnahme mittels der Pumpvorrichtung 205 vorzugsweise eine Qualitätskontrolle der Suspension aus Fasern umfassendem Material 102 durchgeführt werden, bevor diese der Einrichtung zum Herstellen des Behälters 203 zugeführt wird.

Zusätzlich oder auch alternativ kann eine Qualitätskontrolle der Suspension über den in der Abführleitung 109 angeordneten Sensor 202 durchgeführt werden. In einer Ausführungsform kann der Sensor 202 als Coriolis-Masse-Durchfluss-Sensor ausgestaltet sein. Mittels des Coriolis-Masse-Durchfluss-Sensors kann beispielsweise eine Viskosität und/oder Dichte der Suspension 102 bestimmt werden und hierauf basierend durch die Steuereinheit 106 ein Verarbeitungszustand der Suspension 102 bestimmt und eine Qualitätskontrolle der von der Vorrichtung 100 bereitgestellten Suspension 102 durchgeführt werden.

In einer Ausführungsform kann es vorgesehen sein, dass die Steuereinheit 106 ausgebildet ist, die Zufuhr der Suspension aus Fasern umfassendem Material 102 von der Vorrichtung 100 zu der Einrichtung zum Herstellen des Behälters 203 zu unterbrechen, wenn durch die Steuereinheit 106 basierend auf der durch die Energieaufnahme der Pumpvorrichtung 205 und/oder die durch den Sensor 202 ermittelte rheologische Eigenschaft bestimmt wird, dass der Verarbeitungszustand der Suspension aus Fasern umfassendem Material 102 nicht einem gewünschten Verarbeitungszustand beziehungsweise die Qualität der Suspension aus Fasern umfassendem Material 102 nicht einer gewünschten Qualität entspricht. In diesem Fall kann es vorgesehen sein, dass die Suspension aus Fasern umfassendem Material 102 mittels der Pumpvorrichtung 205 wieder zurück in die Vorrichtung 100 geführt wird und weiter gerührt wird und/oder ein Flüssigkeits- oder Feststoffanteil der Suspension verändert wird, bis der gewünschte Verarbeitungszustand und/oder die gewünschte Qualität der Suspension 102 erreicht wird.

Zusätzlich oder alternativ kann es auch vorgesehen sein, dass die Abführleitung 109 über eine Rückführleitung mit dem Tank 101 beziehungsweise der Vorrichtung 100 verbunden ist und die Suspension aus Fasern umfassendem Material oder ein Teil der Suspension aus Fasern umfassendem Material von der Abführleitung 109 über die Rückführleitung zurück in den Tank 101 geführt werden kann. Ferner kann es vorgesehen sein, dass die Suspension aus Fasern umfassendem Material über die Rückführleitung durch die Abführleitung 109 und den Tank 101 zirkuliert werden kann. Dies kann beispielsweise dann vorgesehen sein, wenn der Einrichtung zum Herstellen des Behälters 203 gerade keine Suspension aus Fasern umfassendem Material zur Verfügung gestellt werden soll. Durch die Zirkulation der Suspension kann in diesem Fall sichergestellt werden, dass die Suspension aus Fasern umfassendem Material in der Abführleitung 109 homogen bleibt und sich das Fasern umfassende Material in der Abführleitung 109 nicht absetzt. Optional kann die Rückführleitung einen Sensor umfassen, welcher ausgebildet sein kann, einen ersten Verarbeitungszustand beziehungsweise eine erste Qualität der über die Rückführleitung zurückgeführten Suspension aus Fasern umfassendem Material zu bestimmen. Die Steuereinheit kann optional ausgebildet sein, den ersten Verarbeitungszustand beziehungsweise die erste Qualität der rückgeführten Suspension aus Fasern umfassendem Material mit einem zweiten Verarbeitungszustand beziehungsweise einer zweiten Qualität der sich in dem Tank befindlichen Suspension zu vergleichen und zu bestimmen, ob der erste Verarbeitungszustand beziehungsweise die erste Qualität der zurückgeführten Suspension einem bestimmten Verarbeitungszustand beziehungsweise einem bestimmten Qualitätswert entspricht.

Wird dagegen anhand der Energieaufnahme der Pumpvorrichtung 205 und/oder mittels des Sensors 202 bestimmt, dass die Suspension 102 einen gewünschten Verarbeitungszustand aufweist beziehungsweise, dass die Qualität der Suspension 102 einen gewünschten Wert aufweist, dann kann der Einrichtung 203 die Suspension aus Fasern umfassendem Material weiter zugeführt werden.

Durch die Qualitätskontrolle in der Abführleitung 109 kann auch im Falle eines Fehlers bei der Bestimmung der Qualität der Suspension in dem Tank 101 sichergestellt werden, dass nur eine Suspension hinreichend hoher Qualität der Einrichtung zum Herstellen des Behälters 203 zugeführt wird und die Qualität der mittels der Einrichtung zum Herstellen des Behälters 203 erzeugten Behälter sichergestellt werden.

In einer Ausführungsform kann die Einrichtung zum Herstellen des Behälters 203 eine Form umfassen. Die Form kann wiederum einen perforierten Hohlraum umfassen, welcher einen Negativabdruck des herzustellenden Behälters darstellen kann. Zum Herstellen des Behälters kann es vorgesehen sein, dass die Form mit der von der Vorrichtung 100 über die Abführleitung 109 zugeführte Suspension 102 beaufschlagt wird. Aufgrund der Perforation der Form und eines in der Form vorherrschenden Überdrucks findet eine Anlagerung des Fasern umfassenden Materials an der Wandung der Form statt, während die flüssige Komponente der Suspension durch die Perforation wieder aus der Form herausgeführt wird. Die Einrichtung 203 kann zudem eine Komponente zum Aushärten der Suspension aus Fasern umfassendem Material umfassen. Hierbei kann es sich beispielsweise um eine Wärme-, Infrarot- oder Mikrowelle handeln, mittels welcher die an der Wandung der Form angelagerte Suspension mit elektromagnetischer Strahlung entsprechender Wellenlänge beaufschlagt werden kann.

Stromab der Einrichtung zum Herstellen des Behälters 203 kann optional eine Transportvorrichtung 204 zum Abtransport der durch die Einrichtung 203 hergestellten Behälter aus Fasern umfassendem Material vorgesehen sein. Mittels der Transportvorrichtung 204 können die hergestellten Behälter beispielsweise an eine nachgeordnete Vorrichtung zum Behandeln der Behälter, wie beispielsweise eine Etikettiermaschine, einen Füller, einen Verschließer oder jede andere Vorrichtung, welche zum Behandeln von Behältern geeignet ist, übergeben werden. Alternativ kann es auch vorgesehen sein, dass die mittels der Einrichtung 203 hergestellten Behälter mittels der Transportvorrichtung 204 einer Speichereinrichtung zugeführt werden.

In einer Ausführungsform kann es auch vorgesehen sein, dass mehrere Einrichtungen zum Herstellen der Behälter 203 mit der Vorrichtung 100 über entsprechende Abführleitungen 109 verbunden sind. Beispielsweise kann es vorgesehen sein, dass 5, 10, oder 50 Einrichtungen zum Herstellen von Behältern 203 mit der Vorrichtung 100 in Verbindung stehen. Somit kann der Behälterdurchsatz durch die Vorrichtung 200 erhöht werden.

**Patentansprüche**

1. Vorrichtung (100) zum Bestimmen einer rheologischen Eigenschaft einer Suspension aus Fasern umfassendem Material (102) zum Herstellen von Behältern, umfassend einen Tank (101) zum Speichern der Suspension aus Fasern umfassendem Material (102) und eine Steuereinheit (106), wobei der Tank (101) eine Rührvorrichtung (104) zum Rühren der Suspension aus Fasern umfassendem Material (102) umfasst und die Steuereinheit (106) ausgebildet ist, basierend auf einer Wechselwirkung zwischen der Rührvorrichtung (104) und der Suspension aus Fasern umfassendem Material (102) eine rheologische Eigenschaft der Suspension aus Fasern umfassendem Material (102) zu bestimmen.

2. Vorrichtung nach Anspruch 1, wobei es sich bei der rheologischen Eigenschaft um eine Viskosität der Suspension aus Fasern umfassendem Material (102) handelt.

3. Vorrichtung nach Anspruch 1 oder 2, wobei es sich bei der Wechselwirkung um ein Drehmoment, um eine Leistungsaufnahme oder um einen Stromverbrauch handelt, welches durch die Rührvorrichtung (104) aufgewendet werden muss, um eine bestimmte Drehzahl der Rührvorrichtung (104) beim Rühren der Suspension zu erreichen und/oder um eine Drehzahl der Rührvorrichtung (104), welche mit einem vorgegebenen Drehmoment, einer vorgegebenen Leistungsaufnahme oder einem vorgegebenen Stromverbrauch erreicht werden kann.

4. Vorrichtung nach einem der Ansprüche 1 bis 3, wobei die Steuereinheit (106) ausgebildet ist, eine Veränderung der rheologischen Eigenschaft innerhalb eines bestimmten Zeitintervalls zu bestimmen.

5. Vorrichtung nach Anspruch 4, wobei die Steuereinheit (106) ausgebildet ist einen Gleichgewichtswert der rheologischen Eigenschaft der Suspension aus Fasern umfassendem Material (102) zu bestimmen, wenn die Veränderung der rheologischen Eigenschaft innerhalb des bestimmten Zeitintervalls unter einem ersten Schwellenwert liegt.

6. Vorrichtung nach Anspruch 5, wobei ein Feststoffgehalt und/oder ein Flüssigkeitsgehalt der Suspension aus Fasern umfassendem Material (102) verändert werden kann, wenn der Gleichgewichtswert um wenigstens einen zweiten Schwellenwert von einem Sollwert abweicht.

7. Vorrichtung nach Anspruch 5, umfassend eine Einrichtung zum Herstellen eines Behälters (203), wobei der Tank (101) mit der Einrichtung zum Herstellen des Behälters über eine Abführleitung (109) verbunden ist und die Suspension aus Fasern umfassendem Material (102) der Einrichtung zum Herstellen des Behälters (203) zugeführt werden kann, wenn der Gleichgewichtswert um weniger als einen zweiten Schwellenwert von einem Sollwert abweicht.

8. Verfahren zum Bestimmen einer rheologischen Eigenschaft einer Suspension aus Fasern umfassendem Material (102) zum Herstellen von Behältern, wobei die Suspension aus Fasern umfassendem Material (102) in einem Tank (101) gespeichert und mittels einer Rührvorrichtung (104) in dem Tank gerührt wird, wobei mittels einer Steuereinheit (106) basierend auf einer Wechselwirkung zwischen der Rührvorrichtung (104) und der Suspension aus Fasern umfassendem Material (102) eine rheologische Eigenschaft der Suspension aus Fasern umfassendem Material (102) bestimmt wird.

9. Verfahren nach Anspruch 8, wobei es sich bei der rheologischen Eigenschaft um eine Viskosität der Suspension aus Fasern umfassendem Material (102) handelt.

10. Verfahren nach Anspruch 8 oder 9, wobei es sich bei der Wechselwirkung um ein Drehmoment, um eine Leistungsaufnahme oder um einen Stromverbrauch handelt, welches durch die Rührvorrichtung (104) aufgewendet wird, um eine bestimmte Drehzahl der Rührvorrichtung (104) beim Rühren der Suspension zu erreichen und/oder um eine Drehzahl der Rührvorrichtung (104), welche mit einem vorgegebenen Drehmoment, einer vorgegebenen Leistungsaufnahme oder einem vorgegebenen Stromverbrauch erreicht werden kann.

11. Verfahren nach einem der Ansprüche 8 bis 10, wobei durch die Steuereinheit (106) eine Veränderung der rheologischen Eigenschaft innerhalb eines bestimmten Zeitintervalls bestimmt wird.

12. Verfahren nach Anspruch 11, wobei durch die Steuereinheit (106) ein Gleichgewichtswert der rheologischen Eigenschaft der Suspension aus Fasern umfassendem Material (102) bestimmt wird, wenn die Veränderung der rheologischen Eigenschaft innerhalb des bestimmten Zeitintervalls unterhalb eines ersten Schwellenwertes liegt.

13. Verfahren nach Anspruch 12, wobei ein Feststoffgehalt und/oder ein Flüssigkeitsgehalt der Suspension aus Fasern umfassendem Material (102) verändert wird, wenn der Gleichgewichtswert um wenigstens einen zweiten Schwellenwert von einem Sollwert abweicht.

14. Verfahren nach Anspruch 12, wobei die Suspension aus Fasern umfassendem Material (102) aus dem Tank (101) einer Einrichtung zum Herstellen eines Behälters (203) über eine Abführleitung (109) zugeführt wird, wenn der Gleichgewichtswert um weniger als einen zweiten Schwellenwert von einem Sollwert abweicht.

15. Verfahren nach Anspruch 14, wobei die Abführleitung (109) eine Pumpvorrichtung (205) zur Förderung der Suspension aus Fasern umfassendem Material (102) von dem Tank (101) zu der Einrichtung zum Herstellen des Behälter (203) umfasst und die rheologische Eigenschaft der Suspension aus Fasern umfassendem Material (102) in der Abführleitung (109) mittels einer Energieaufnahme der Pumpvorrichtung (205) zur Qualitätskontrolle bestimmt wird und/oder wobei die Abführleitung (109) einen Sensor (202) umfasst und die rheologische Eigenschaft der Suspension aus Fasern umfassendem Material (102) in der Abführleitung (109) mittels des Sensors (202) zur Qualitätskontrolle bestimmt wird.

FIG. 1

FIG. 2

Europäisches
Patentamt

European
Patent Office

Office européen
des brevets

**EUROPÄISCHER RECHERCHENBERICHT**

Nummer der Anmeldung

EP 24 19 5759

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2013 0041976 A (DAINIPPON INK & CHEMICALS [JP]) 25. April 2013 (2013-04-25) * Absätze [0011], [0133] - [0142], [0190], [0197], [0203], [0205], [0207], [0220], [0240]; Abbildung 3 * ----- | 1-15 | INV. G01N11/14 B01F35/212 B01F35/222 ADD. G01N11/00 |
| X | CA 2 202 869 C (KHASHOGGI E IND [US]) 23. November 2004 (2004-11-23) * Seite 1, Zeilen 6-37 * * Seite 12, Zeile 3 - Zeile 8 * ----- | 1-15 | |
| X | DE 195 00 249 A1 (MICROCELL INC [US]) 11. Juli 1996 (1996-07-11) * Seite 3, Zeile 2 - Zeile 12 * * Seite 5, Zeile 30 - Zeile 39 * * Seite 7, Zeile 42 - Zeile 45 * ----- | 1-15 | |
| A | Anonymous: "BROOKFIELD DIGITAL RHEOMETER MODEL DV-III Operating Instructions", , 1. Januar 1995 (1995-01-01), Seiten 1-64, XP093235674, Gefunden im Internet: URL:https://brookfield.manymanuals.com/measuring-instruments/dv-iii-rheometer/user-manual-25314/download [gefunden am 2024-12-19] * Abschnitt 1. "INTRODUCTION", erster Absatz * ----- | 1,8 | RECHERCHIERTE SACHGEBIETE (IPC) G01N B01F |
| A | JP 2010 190882 A (DAINIPPON INK & CHEMICALS) 2. September 2010 (2010-09-02) * Absatz [0049] - Absatz [0053]; Abbildung 5 * ----- | 6,13 | |

Der vorliegende Recherchenbericht wurde für alle Patentansprüche erstellt

| Recherchenort | Abschlußdatum der Recherche | Prüfer |
|---|---|---|
| Den Haag | 13. Januar 2025 | Eidmann, Gunnar |

## ANHANG ZUM EUROPÄISCHEN RECHERCHENBERICHT
## ÜBER DIE EUROPÄISCHE PATENTANMELDUNG NR.

EP 24 19 5759

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2025

| Im Recherchenbericht angeführtes Patentdokument | Datum der Veröffentlichung | Mitglied(er) der Patentfamilie | | Datum der Veröffentlichung |
|---|---|---|---|---|
| KR 20130041976 A | 25-04-2013 | CN | 103430006 A | 04-12-2013 |
| | | JP | 5168609 B2 | 21-03-2013 |
| | | JP | WO2013002175 A1 | 23-02-2015 |
| | | KR | 20130041976 A | 25-04-2013 |
| | | WO | 2013002175 A1 | 03-01-2013 |
| CA 2202869 C | 23-11-2004 | AT | E222533 T1 | 15-09-2002 |
| | | AT | E228920 T1 | 15-12-2002 |
| | | AU | 703456 B2 | 25-03-1999 |
| | | BR | 9509423 A | 30-09-1997 |
| | | CA | 2202869 A1 | 02-05-1996 |
| | | DE | 29522138 U1 | 02-03-2000 |
| | | DE | 69527856 T2 | 08-05-2003 |
| | | DE | 69529102 T2 | 25-09-2003 |
| | | DK | 0804331 T3 | 23-12-2002 |
| | | DK | 0960711 T3 | 24-03-2003 |
| | | EP | 0804331 A1 | 05-11-1997 |
| | | EP | 0960711 A2 | 01-12-1999 |
| | | EP | 1300228 A2 | 09-04-2003 |
| | | ES | 2181789 T3 | 01-03-2003 |
| | | ES | 2190152 T3 | 16-07-2003 |
| | | IN | 192198 B | 13-03-2004 |
| | | JP | H11504950 A | 11-05-1999 |
| | | KR | 970706957 A | 01-12-1997 |
| | | NZ | 292832 A | 28-05-1999 |
| | | PT | 804331 E | 31-01-2003 |
| | | PT | 960711 E | 31-03-2003 |
| | | RU | 2160288 C2 | 10-12-2000 |
| | | WO | 9612606 A1 | 02-05-1996 |
| DE 19500249 A1 | 11-07-1996 | DE | 19500249 A1 | 11-07-1996 |
| | | FR | 2729159 A1 | 12-07-1996 |
| | | GB | 2296726 A | 10-07-1996 |
| | | US | 5385640 A | 31-01-1995 |
| JP 2010190882 A | 02-09-2010 | JP | 4883142 B2 | 22-02-2012 |
| | | JP | 2010190882 A | 02-09-2010 |

EPO FORM P0461

Für nähere Einzelheiten zu diesem Anhang : siehe Amtsblatt des Europäischen Patentamts, Nr.12/82